# EUROPEAN PATENT APPLICATION

(11) **EP 4 672 419 A1**
(43) Date of publication of application: **31.12.2025**
(21) Application number: 24819444.1
(22) Date of filing: 06.02.2024
(51) Int. Cl.: H01M 10/42, H01M 10/48, H01M 50/289, H01M 50/249

(54) **BATTERY PACK AND VEHICLE COMPRISING SAME**

(30) Priority: 09.06.2023 KR 20230074502
(71) Applicant: LG ENERGY SOLUTION, LTD., Seoul 07335 (KR)
(72) Inventor: PARK, Jeong-Hoon, Daejeon 34122 (KR)
(74) Representative: Plasseraud IP
(86) International application number: PCT/KR2024/001762
(87) International publication number: WO 2024/253290

(57) **Abstract**

The present disclosure relates to a battery pack including a plurality of battery modules including a plurality of battery cells, a pack case configured to accommodate the plurality of battery modules, a venting device provided in the pack case and configured to discharge gas generated from the battery module to the outside of the pack case, and a cartridge configured to release carbon dioxide stored therein toward the venting device.

## Description

### TECHNICAL FIELD

The present disclosure relates to a battery pack and a vehicle including the same. More specifically, the present disclosure relates to a battery pack capable of suppressing flame generated inside a pack case by recognizing the internal pressure of the pack case, and a vehicle including the same.

The present application claims priority to Korean Patent Application No. 10-2023-0074502 filed on June 09, 2023 in the Republic of Korea, the disclosures of which are incorporated herein by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. If a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or battery pack may be set in various ways depending on the required output voltage or charge/discharge capacity.

Meanwhile, a common method for configuring a battery pack by connecting a plurality of battery cells in series/parallel is to preferentially configure a battery module including at least one battery cell and then add other elements using the at least one battery module, thereby configuring a battery pack or battery rack.

In the case of a conventional battery pack, the internal temperature may rise due to abnormalities or misuse of the battery cell, which may result in an increase in the internal pressure of the battery cell. Due to this internal pressure, high-temperature gas may vent from the battery cell, which is very dangerous because the high-temperature venting gas may spread to adjacent battery modules and cause thermal runaway.

In addition, generally, when gas is ejected from the battery cell, pieces of electrode plates or active materials inside the battery cell may be heated to a high temperature and discharged to the outside, and these high-temperature particles may appear in the form of sparks. In this case, if the sparks react with oxygen when they are emitted, the oxygen may ignite to make a flame or develop into a fire. In particular, as the pressure inside the pack case increases, it may lead to explosion, instead of gradual ignition, causing a bigger problem.

Since battery cells or battery modules are densely packed inside the battery pack, when a thermal event occurs in any one battery cell or battery module, if propagation thereof fails to be delayed or suppressed, thermal runaway may occur, resulting in flame and, in severe cases, explosion. It is necessary to delay or suppress the propagation by removing at least one of the elements that cause flame, such as fuel, oxygen, and heat, to prevent high-temperature gas or sparks from reacting with oxygen and making flame.

### DISCLOSURE

### Technical Problem

The present disclosure has been designed to solve the problems of the related art, and therefore the present disclosure is directed to providing a battery pack capable of ensuring safety and reliability by suppressing flame from occurring inside the pack case in the event of an abnormality of a battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack that includes: a plurality of battery modules including a plurality of battery cells; a pack case configured to accommodate the plurality of battery modules; a venting device provided in the pack case and configured to discharge gas generated from the battery module to the outside of the pack case; and a cartridge configured to release carbon dioxide stored therein toward the venting device.

The cartridge may be provided inside the pack case, and the cartridge and the venting device may be disposed in a straight line in the horizontal direction.

The pack case may include a side frame configured to surround the plurality of battery modules and having the venting device coupled thereto, and a partition configured to divide the plurality of battery modules inside the side frame, and at least a portion of the cartridge may be coupled to the partition facing one side of the side frame on which the venting device is provided.

The battery pack of the present disclosure may further include an internal-pressure sensor provided inside the pack case and configured to measure pressure inside the pack case, and if the pressure measured by the internal-pressure sensor is equal to or greater than a first value, carbon dioxide stored inside the cartridge may be released toward the venting device.

The venting device may be configured to operate if the pressure inside the pack case is equal to or greater than a second value, and the first value may be defined to be greater than the second value.

For example, the first value may be defined as 0.2 bar.

A plurality of cartridges and a plurality of venting devices may be provided, and a plurality of units comprised of one cartridge and one venting device may be provided, and the plurality of units may be provided symmetrically with respect to the center of the side frame.

The pack case may further include a cross-beam configured to connect at least portions of the side frame to each other and partition the plurality of battery modules, and the plurality of units may be symmetrically provided on both sides of the cross-beam.

The internal-pressure sensor may be provided in a space between the battery module and the side frame.

A plurality of internal-pressure sensors may be provided symmetrically on both sides of the cross-beam.

The cartridge may include a cylinder unit that includes a storage portion having a space for storing carbon dioxide and a release portion extending from the storage portion and discharging carbon dioxide therethrough.

The diameter of the release portion may be configured to be smaller than the diameter of the storage portion.

The cartridge may further include an operation unit connected to the cylinder unit and configured to release carbon dioxide from the cylinder unit if the pressure measured by the internal-pressure sensor is equal to or greater than the first value.

In addition, the present disclosure provides a vehicle including the battery pack according to the present disclosure.

### Advantageous Effects

According to an aspect of the present disclosure, it is possible to ensure safety and reliability by suppressing the occurrence of flame inside the pack case by removing elements that may make flame in the event of an abnormality in the battery cell or battery module.

In addition, according to an aspect of the present disclosure, it is possible to prevent, in the event of an abnormality in the battery cell or battery module, sparks emitted from the battery cell from igniting oxygen, thereby suppressing the flame.

In addition, according to an aspect of the present disclosure, it is possible to quickly discharge, in the event of an abnormality in the battery cell or battery module, venting gas to the outside of the pack case, thereby suppressing the flame, and maximally prevent thermal damage to other battery modules, thereby effectively securing thermal propagation prevention performance in a pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is an exploded perspective view of a battery pack according to an embodiment of the present disclosure.
FIG. 3 is a perspective view of a battery module according to an embodiment of the present disclosure.
FIG. 4 is a diagram illustrating the position of a cartridge in a battery pack according to an embodiment of the present disclosure.
FIG. 5 is a diagram illustrating the direction in which a cartridge operates in a battery pack according to an embodiment of the present disclosure.
FIG. 6 is a cross-sectional view taken along line A-A' in FIG. 5.
FIG. 7 is a diagram illustrating the detailed structure of a cartridge according to an embodiment of the present disclosure.
FIG. 8 is a diagram illustrating the position of an operation unit of a cartridge according to an embodiment of the present disclosure.
FIG. 9 is a diagram illustrating the position of an operation unit of a cartridge according to another embodiment of the present disclosure.
FIG. 10 is a perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted. For reference, in this specification, terms indicating directions are based on the elements shown in the attached drawings, and are relative terms that may vary depending on the postures or positions of the actual elements.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the forward/backward direction, the Y-axis direction may indicate the left/right direction perpendicular to the X-axis direction on the flat plane (X-Y plane), and the Z-axis direction may indicate the upward/downward direction (vertical direction) perpendicular to both the X-axis direction and the Y-axis direction.

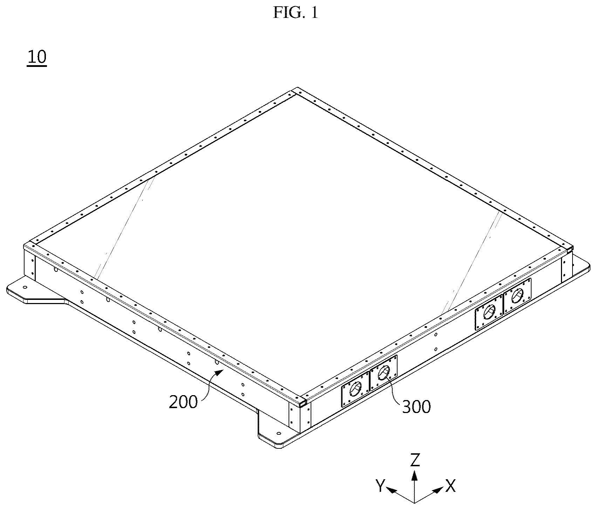

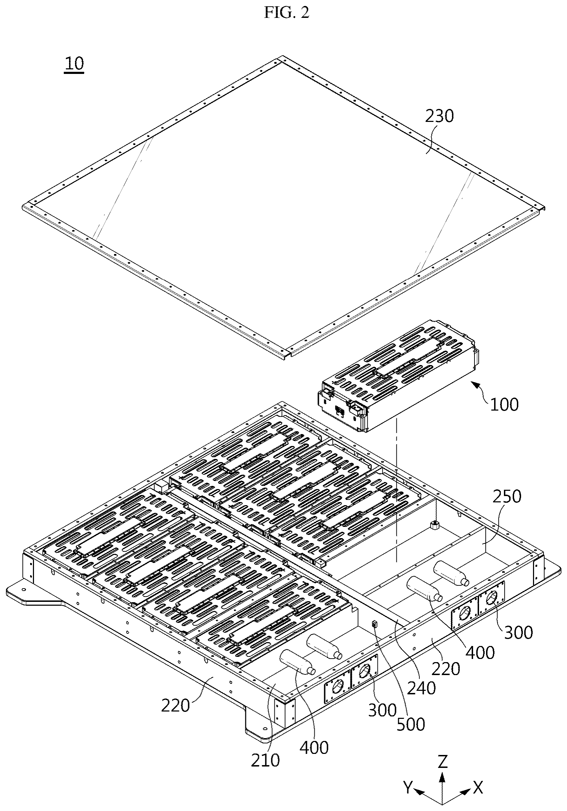

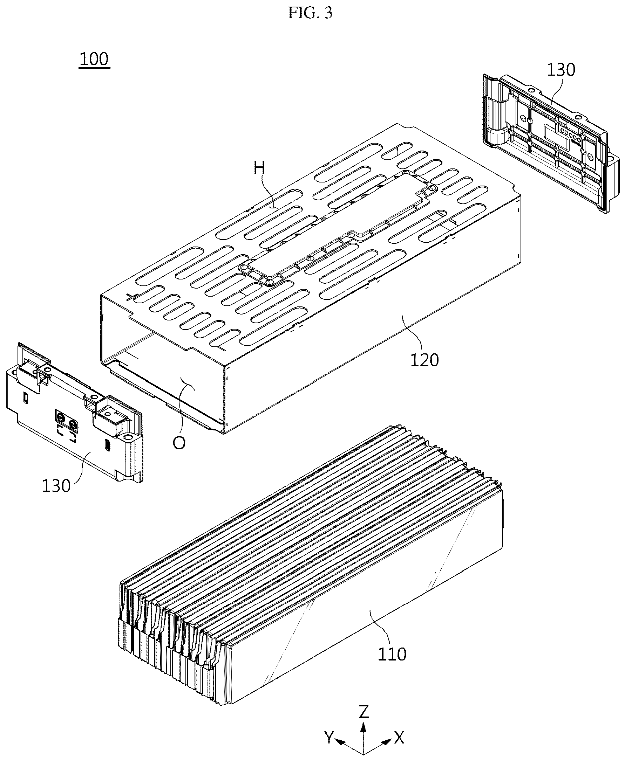

FIG. 1 is a perspective view of a battery pack according to an embodiment of the present disclosure, and FIG. 2 is an exploded perspective view of a battery pack according to an embodiment of the present disclosure. FIG. 3 is a perspective view of a battery module according to an embodiment of the present disclosure.

Referring to FIGS. 1 to 3, a battery pack 10 according to an embodiment of the present disclosure may include a battery module 100, a pack case 200, a venting device 300, and a cartridge 400.

The battery module 100 may include a plurality of battery cells 110. The battery cell 110 may be any type of secondary battery, such as a prismatic, cylindrical, or pouch-type battery cell. The present embodiment, as shown in FIG. 3, will be described based on the battery cell 110 that is a pouch-type battery cell.

The present disclosure is not limited to a specific type or form of battery cell 110, and various battery cells 110 known at the time of filing the present disclosure may be used to constitute the battery module 100 of the present disclosure. Although the present embodiment shows a pouch-type secondary battery, which has high energy density and is easy to stack, by way of example as shown in the drawing, a cylindrical or prismatic secondary battery may be applied to the battery cell 110.

The plurality of battery cells 110 may be arranged in columns and rows inside the battery module 100. For example, as shown in FIG. 3, the plurality of battery cells 110 may be arranged side by side in the left/right direction (the Y-axis direction) while standing in the vertical direction (the Z-axis direction).

The battery pack 10 may have a plurality of battery modules 100 including a plurality of battery cells 110 described above. For example, as shown in FIG. 2, the plurality of battery modules 100 may be arranged side by side in the horizontal direction (the X-axis direction and Y-axis direction).

The battery pack 10 according to an embodiment of the present disclosure may include a pack case 200. The pack case 200 may be configured to accommodate the plurality of battery modules 100. The detailed structure of the pack case 200 will be described later.

In addition, the battery pack 10 according to an embodiment of the present disclosure may include a venting device 300. The venting device 300 may be configured to discharge gas generated inside the battery module 100 to the outside of the pack case 200 in the event of abnormalities of the battery module 100. The venting gas generated inside the battery module 100 may be discharged to the outside of the pack case 200 through the venting device 300.

The battery pack 10 according to an embodiment of the present disclosure may further include a cartridge 400. The cartridge 400 may be configured to store carbon dioxide therein. The carbon dioxide may be stored in a liquid state inside the cartridge 400 under high pressure. For example, the cartridge 400 may be a commercially available product that is used to inflate tires of bicycles by injecting carbon dioxide. The cartridge 400 may be used along with an inflator or adapter.

The cartridge 400 may be configured to release carbon dioxide stored therein toward the venting device 300. The cartridge 400 may be provided at a position facing the venting device 300, and may enable high temperature gas or the like to be discharged more quickly through the venting device 300 when a thermal event occurs in a specific battery cell 110 or battery module 100. As a result, it is possible to facilitate discharge of high-temperature gas, thereby obtaining a cooling effect, so that the internal pressure inside the pack case 200 may be reduced to avoid the risk of explosion.

In addition, according to the above-implemented configuration of the present disclosure, it is possible to ensure safety and reliability by suppressing flame from occurring inside the pack case 200 by removing high-temperature gas, which is one of the elements that make flame. In addition, according to the above-implemented configuration of the present disclosure, it is possible to effectively secure thermal propagation prevention performance in the battery pack 10 by maximally preventing thermal damage to other battery modules 100.

Meanwhile, when gas is ejected from the battery cell 110, pieces of electrode plates or active materials inside the battery cell 110 may be heated to a high temperature and discharged to the outside, and these high-temperature particles may appear in the form of sparks. In this case, if oxygen ignites when the sparks are discharged to the outside of the battery module 100, a flame may be generated or a fire may develop.

Carbon dioxide stored inside the cartridge 400 is heavier than oxygen, so when it is released into a combustible material, it forms an incombustible layer on the surface of the combustible material. Therefore, when carbon dioxide is released from the cartridge 400, it may block the supply of oxygen, which is one of the elements that cause flame. Therefore, according to the above-implemented configuration of the present disclosure, carbon dioxide released from the cartridge 400 may purge oxygen from the pack case 200. As a result, it is possible to prevent sparks from reacting with oxygen inside the pack case 200 and generating flame by removing oxygen, which is one of the elements that cause flame.

Meanwhile, the detailed structure of the battery module 100 according to an embodiment of the present disclosure will be described with reference to FIG. 3. The battery module 100 according to the present embodiment may include a case body 120 and an end plate 130 disposed on the front and rear faces of the case body 120.

The case body 120 may be configured in the shape of a square tube in a hollow structure having open ends O at both ends in the longitudinal direction and having an empty space therein. For example, the case body 120 may be configured in the form of a tube that has an upper face, a lower face, a left face, and a right face, and has openings formed at the front and rear ends, respectively.

In addition, the case body 120 may be formed in various other shapes. For example, the case body 120 may be configured in a form in which a left plate, a right plate, and a bottom plate are integrated with each other. In this case, the integrated case part may be referred to as a U-frame. A top plate may be welded to the top of the U-frame, thereby configuring a tubular shape. Alternatively, the case body 120 may include a box-shaped lower case in which a left plate, a right plate, a front plate, and a rear plate are integrated with each other, and an upper cover that closes the top opening of the lower case.

In addition, the case body 120 may be configured such that the battery cells 110 are able to be inserted thereinto in one direction. For example, the battery cells 110 may be inserted into the case body 120 in the forward/backward direction (the X-axis direction). That is, the case body 120 may be configured to insert the battery cells 110 therein using a sliding or press-fitting manner. For press-fitting, there may be almost no gap between the upper and lower faces of the case body 120 and the upper and lower ends of the battery cells 110, and there may also be almost no gap between both side faces of the case body 120 and both side portions of the battery cells 110.

This case body 120 may be made of a metal material with rigidity and heat resistance in order to physically or chemically protect the accommodated battery cells 110.

Meanwhile, a venting hole H may be provided on the case body 120, enabling directional venting in one direction. For example, as shown in FIG. 3, a plurality of venting holes H may be formed on the upper face of the case body 120, so that directional venting in the upward direction of the battery module 100 may be performed through the venting holes H. Specifically, high-temperature gas discharged from the battery cell 110 through the venting holes H may be discharged to the outside of the pack case 200 through the venting device 300.

The end plate 130 may be provided to be coupled to the open end O of the case body 120. For example, the end plate 130 may have an inner side (facing the open end O) made of an insulating material and an outer side (constituting the exterior of the battery module 100) made of a metal material. In addition, the end plate 130 may have, at least in part, holes or slits through which positive and negative electrode terminals or connectors of the battery module 100 are exposed to the outside.

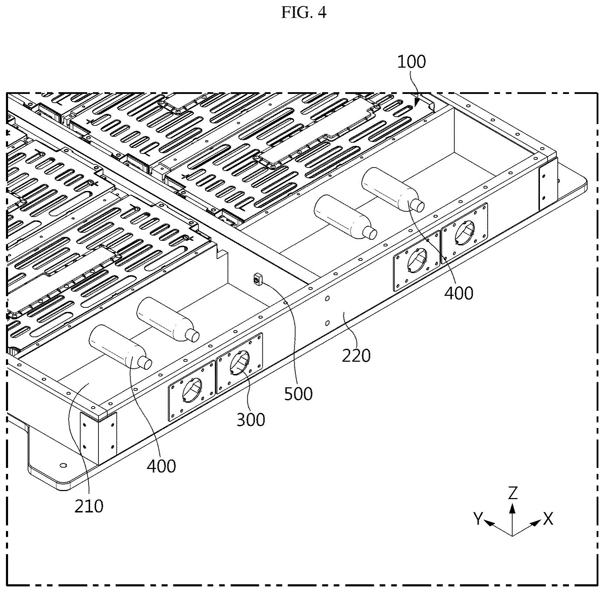

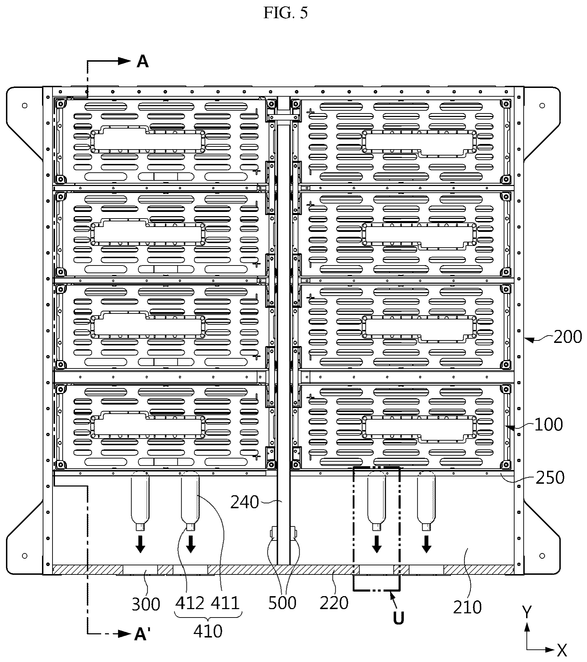

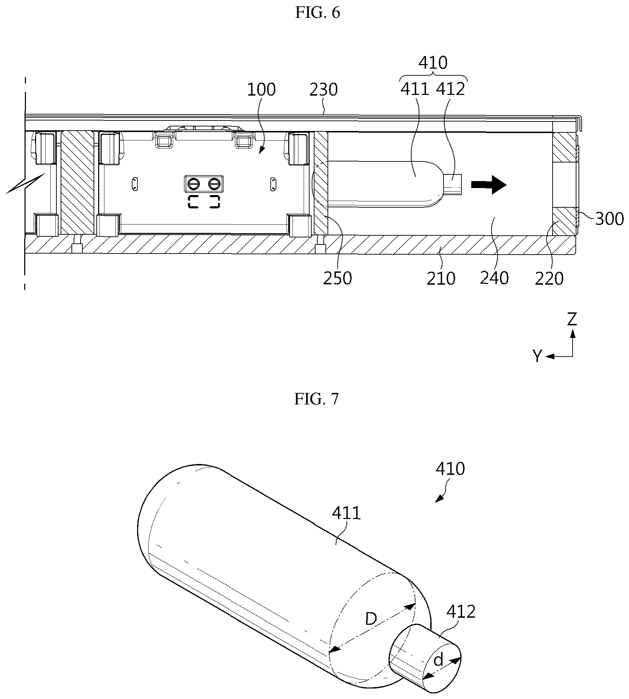

FIG. 4 is a diagram illustrating the position of a cartridge in a battery pack according to an embodiment of the present disclosure, FIG. 5 is a diagram illustrating the direction in which a cartridge operates in a battery pack according to an embodiment of the present disclosure, and FIG. 6 is a cross-sectional view taken along line A-A' in FIG. 5.

The cartridge 400 may be provided inside the pack case 200. According to an embodiment of the present disclosure, the cartridge 400 and the venting device 300 may be provided in a straight line in the horizontal direction. For example, as shown in FIGS. 4 to 6, the cartridge 400 and the venting device 300 may be disposed in a straight line in the Y-axis direction. According to the above-implemented configuration of the present disclosure, carbon dioxide stored inside the cartridge 400 may be released directly toward the venting device 300, thereby purging high-temperature gas or oxygen discharged through the venting device 300. As a result, it is possible to ensure safety and reliability by suppressing the occurrence of flame inside the pack case 200 by removing elements causing flame in the event of an abnormality in the battery cell 110 or battery module 100.

Meanwhile, referring to FIGS. 2 to 6, the pack case 200 may include a base frame 210. The base frame 210 may be provided to constitute the lower surface of the pack case 200. Accordingly, the plurality of battery modules 100 may be seated on the base frame 210. In this implemented configuration, the base frame 210 may be configured in the form of a square plate.

In addition, the pack case 200 may include a side frame 220. The side frame 220 may be provided to extend upward from the respective edges of the base frame 210. The side frame 220 may be provided to surround the plurality of battery modules 100. For example, in this implemented configuration, the side frame 220 may include walls extending in the X-axis direction and the Y-axis direction.

The venting device 300 may be provided to be coupled to the side frame 220. Although the venting device 300 is provided on the right wall (in the -Y-axis direction) in FIGS. 2 and 4, the side frame 220 may be provided on any wall. The venting device 300 may be provided on the side frame 220 in the respective rows in which the plurality of battery modules 100 is arranged. According to the above-implemented configuration of the present disclosure, in the event of an abnormality of the battery cell 110, high-temperature gas or sparks may be discharged in various directions of the pack case 200, so that the gas or the like may be easily discharged to the outside of the pack case 200.

In addition, the pack case 200 may further include a partition 250. The partition 250 may be provided to partition the plurality of battery modules 100 inside the side frame 220. The partition 250 may be provided to be spaced apart from the side frame 220. A plurality of partitions 250 may be provided to be spaced apart from each other at regular intervals. For example, the partitions 250 may include a plurality of walls extending in the X-axis or Y-axis direction inside the side frame 220. According to the above-implemented configuration of the present disclosure, since the plurality of battery modules 100 is separated by the partitions 250, even if an abnormal situation happens in one battery module 100, heat propagation to other battery modules 100 may be prevented.

According to an embodiment of the present disclosure, at least a portion of the cartridge 400 may be coupled to the partition 250. For example, as shown in FIGS. 4 to 6, at least a portion of the cartridge 400 may be coupled to the partition 250 facing one side of the side frame 220 on which the venting device 300 is provided. The remaining portions of the cartridge 400 may be located between the partition 250 and the side frame 220. According to the above-implemented configuration of the present disclosure, the position of the cartridge 400 may be constrained and firmly fixed even if high-pressure carbon dioxide is rapidly and instantaneously released from the cartridge 400.

In addition, referring to FIGS. 1 and 2, the pack case 200 may include a pack lid 230 configured to cover the top of the battery module 100.

Meanwhile, referring to FIGS. 4 and 5, the battery pack 10 according to an embodiment of the present disclosure may further include an internal-pressure sensor 500. The internal-pressure sensor 500 may be configured to measure the pressure inside the pack case 200. The internal-pressure sensor 500 may be provided inside the pack case 200. The position of the internal-pressure sensor 500 will be described in detail later.

If high-temperature venting gas is discharged from the battery cell 110 or battery module 100, as the pressure inside the pack case 200 increases, it may lead to explosion of adjacent battery modules 100, instead of gradual ignition, causing a bigger problem. Therefore, the battery pack 10 of the present disclosure may be configured such that carbon dioxide stored inside the cartridge 400 is released toward the venting device 300 if the pressure measured by the internal-pressure sensor 500 is greater than or equal to a first value. That is, whether the cartridge 400 operates may be determined depending on the magnitude of pressure inside the pack case 200 measured by the internal-pressure sensor 500. According to the above-implemented configuration of the present disclosure, the cartridge 400 may be selectively operated only when there is a serious risk such as explosion depending on the magnitude of pressure inside the pack case 200 measured by the internal-pressure sensor 500, thereby efficiently discharging the venting gas to the outside of the venting device 300.

Meanwhile, if high-temperature gas is discharged from the battery cell 110 through the venting holes H, the pressure inside the pack case 200 may increase so that the venting device 300 may operate. Specifically, the venting device 300 may be configured to operate if the pressure inside the pack case 200 is equal to or greater than a second value. The second value for triggering the venting device 300 may be defined differently depending on the type of venting device 300. For example, the second value may be defined variously in the range of 0.02 to 0.2 bar, so that the venting device 300 may operate when a pressure within the above range is recognized.

According to an embodiment of the present disclosure, if the pressure inside the pack case 200 measured by the internal-pressure sensor 500 is higher than the pressure at which the venting device 300 operates, the cartridge 400 may operate to release carbon dioxide stored inside the cartridge 400. That is, the first value may be defined to be greater than the second value.

For example, if thermal runaway occurring in a specific battery module 100 leads to heat propagation to other adjacent battery modules 100, the pressure inside the pack case 200 may be 0.2 bar to 0.6 bar. Therefore, if the pressure measured by the internal-pressure sensor 500, that is, the first value, is 0.2 bar, carbon dioxide may be released from the cartridge 400.

According to the above-implemented configuration of the present disclosure, if there is a risk of explosion due to the internal pressure of the pack case 200 higher than the pressure at which the venting device 300 operates, as a result of thermal runaway or the like, the cartridges 400 may be operated sequentially or independently of the venting device 300. Accordingly, the pressure inside the pack case 200 may be reduced by discharging high-temperature gas or the like to the outside of the pack case 200 through carbon dioxide released from the cartridge 400. In addition, according to the above-implemented configuration of the present disclosure, safety may be secured by removing heat and/or gas, which are elements that may cause flame, and suppressing the occurrence of flame.

Meanwhile, referring to FIGS. 4 and 5, a plurality of cartridges 400 and a plurality of venting devices 300 may be provided. In addition, a plurality of units U comprised of one cartridge 400 and one venting device 300 may be provided.

Each of the plurality of units U may be provided on the side frame 220 of the pack case 200. In this case, the plurality of units U may be provided symmetrically with respect to the center of the side frame 220. According to the above-implemented configuration of the present disclosure, carbon dioxide may be released from the cartridge 400 included in the unit U provided on the battery module 100, regardless of the portion of the battery module 100 where venting gas is discharged, thereby easily suppressing the occurrence of flame.

Meanwhile, as shown in FIGS. 2 and 4, the pack case 200 according to an embodiment of the present disclosure may further include a cross-beam 240. The cross-beam 240 may be provided to connect at least portions of the side frame 220 to each other. For example, as shown in FIG. 2, the cross-beam 240 may be provided to extend in the Y-axis direction. In this case, the cross-beam 240 may partition the plurality of battery modules 100. A plurality of battery modules 100 may be arranged side by side on both sides of the cross-beam 240 inside the pack case 200. In this case, the plurality of units U may be symmetrically provided on both sides of the cross-beam 240 with respect to the side frame 220. According to the above-implemented configuration of the present disclosure, carbon dioxide may be rapidly released from the cartridge 400 included in the unit U provided on the battery module 100, regardless of the portion of the battery module 100 where venting gas is discharged, thereby easily suppressing the occurrence of flame.

Meanwhile, the position of the internal-pressure sensor 500 will be described with reference to FIG. 5. The internal-pressure sensor 500 may be provided outside the battery module 100. The internal-pressure sensor 500 may be provided in a space between the battery module 100 and the side frame 220. For example, the internal-pressure sensor 500 may be provided between one side of the side frame 220 on which the venting device 300 is installed and the partition 250 facing the side frame 220.

A plurality of internal-pressure sensors 500 may be provided. The plurality of the internal-pressure sensors 500 may be provided inside the pack case 200. As shown in FIG. 5, the plurality of internal-pressure sensors 500 may be symmetrically provided on both sides of the cross-beam 240. The plurality of internal-pressure sensors 500 may be wirelessly, for example, electrically connected to the cartridges 400 of the units U, respectively, provided on both sides of the cross-beam 240. In this case, the plurality of internal-pressure sensors 500 and the units U may operate independently depending on the portion of the battery module 100 where venting gas or the like is discharged.

For example, in FIG. 5, if an abnormal situation occurs in the battery module 100 on the left side of the cross-beam 240, the pressure measured by the internal-pressure sensor 500 provided on the left side of the cross-beam 240 may reach the first value earlier than the other side. Accordingly, carbon dioxide may be released from the cartridge 400 provided on the left side of the cross-beam 240 toward the venting device 300.

According to the above-implemented configuration of the present disclosure, if high-temperature gas or the like is discharged from any battery cell 110 or battery module 100, the cartridges 400 provided on the battery module 100 may operate independently, thereby sequentially reducing the internal pressure of the pack case 200.

FIG. 7 is a diagram illustrating the detailed structure of a cartridge according to an embodiment of the present disclosure.

The cartridge 400 may include a cylinder unit 410. The cylinder unit 410 may include a storage portion 411 having a space for storing carbon dioxide therein, and a release portion 412 extending from the storage portion 411 to release carbon dioxide. As shown in FIGS. 5 and 6, the storage portion 411 may be coupled to the pack case 200, for example, the partition 250, and in this case, the release portion 412 may be provided to protrude from the storage portion 411 toward the venting device 300.

The diameter d of the release portion 412 may be configured to be smaller than the diameter D of the storage portion 411. The release portion 412 may be made of a material with a lower melting point than the storage portion 411. The melting point of the release portion 412 may be similar to the temperature of flame, so that it melts and carbon dioxide is released when flame occurs. According to the above-implemented configuration of the present disclosure, it is possible to suppress the occurrence of flame by instantly purging and removing venting gas and oxygen, which are elements causing flame, using carbon dioxide rapidly released through the release portion 412 of the cartridge 400.

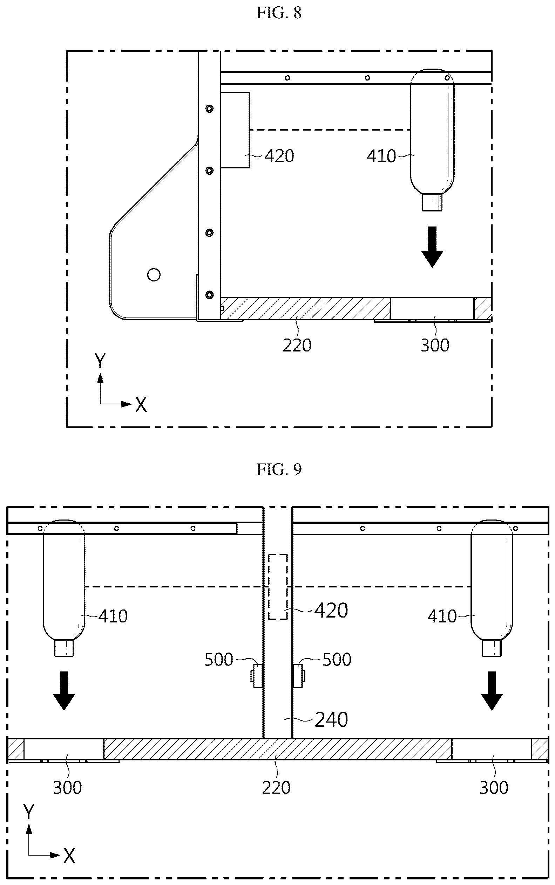

FIG. 8 is a diagram illustrating the position of an operation unit of a cartridge according to an embodiment of the present disclosure.

Meanwhile, the cartridge 400 may further include an operation unit 420. The operation unit 420 may be connected to the cylinder unit 410 and configured to release carbon dioxide from the cylinder unit 410 if the pressure measured by the internal-pressure sensor 500 is equal to or greater than the first value. The operation unit 420 may be provided as any configuration that allows carbon dioxide to be released from the cylinder unit 410.

For example, the battery pack 10 may include a battery management system (BMS) or a battery management unit (BMU) to process a variety of information. The BMS or BMU may exchange information with various control devices through a communication bus such as an SPI or CAN interface. In addition, the BMS or BMU may exchange information with each battery module 100 or a cell supervision circuit (CSC) of each battery module 100.

Pressure information measured by the internal-pressure sensor 500 according to an embodiment of the present disclosure may constitute sensing data of the CSC. With this implemented configuration, pressure information measured by the internal-pressure sensor 500 may be transmitted to the BMS or BMU. The BMS or BMU may be connected to the operation unit 420 through a communication bus such as an SPI or CAN interface. If pressure information measured by the internal-pressure sensor 500 is transmitted to the BMS or BMU, and if the BMS or BMU determines that it is equal to or greater than the first value, the BMS and BMU may transmit a driving signal of the operation unit 420 to the operation unit 420. The operation unit 420 receiving the driving signal may be configured to release carbon dioxide from the cylinder unit 410.

According to the implemented configuration in FIG. 8, the operation unit 420 may be provided in a space between the side frame 220 and the plurality of battery modules 100. For example, a plurality of cylinder units 410 may be provided, and a plurality of operation units 420 may be provided to be respectively connected to the plurality of cylinder units 410.

According to the above-implemented configuration of the present disclosure, since the plurality of operation units 420 is respectively connected to the plurality of cylinder units 410, carbon dioxide may be released from a specific cylinder unit 410 depending on the portion of the battery module 100 where venting gas or the like is generated, thereby effectively suppressing the occurrence of flame.

FIG. 9 is a diagram illustrating the position of an operation unit of a cartridge according to another embodiment of the present disclosure.

The pack case 200 may have a space in which the operation unit 420 is provided. A space in which the operation unit 420 is received may be provided inside the side frame 220 or the cross-beam 240. For example, as shown in FIG. 9, a space in which the operation unit 420 is installed may be provided inside the cross-beam 240.

The operation unit 420 may be connected to the cylinder units 410 provided on both sides of the cross-beam 240, and configured to enable carbon dioxide to be released from several cylinder units 410 provided on both sides of the cross-beam 240 if the pressure measured by the internal-pressure sensor 500 is equal to or greater than the first value.

According to the above-implemented configuration of the present disclosure, the operation unit 420 may be connected to at least one or more cylinder units 410 and may enable carbon dioxide to be simultaneously released from several cylinder units 410 in the event of a thermal event occurring in a specific battery cell 110 or battery module 100, thereby more quickly suppressing the occurrence of flame.

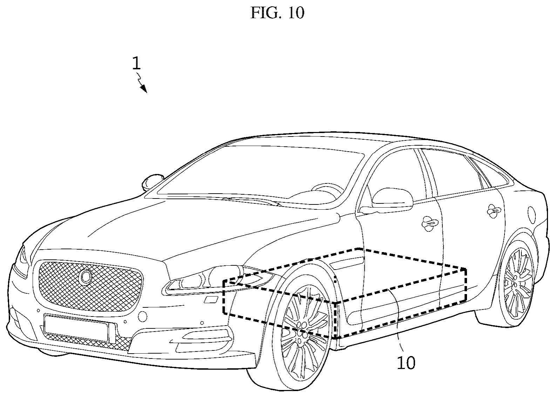

FIG. 10 is a perspective view of a vehicle including a battery pack according to an embodiment of the present disclosure.

Referring to FIG. 10, a vehicle 1 according to an embodiment of the present disclosure may include one or more battery packs 10 according to an embodiment of the present disclosure. The vehicle 1 according to the present disclosure may be, for example, an electric vehicle, a hybrid vehicle, or a plug-in hybrid vehicle. The vehicle 1 includes a four-wheeled vehicle and a two-wheeled vehicle. The vehicle 1 operates by receiving power from the battery pack 10 according to an embodiment of the present disclosure.

Since the battery pack 10 has the various effects mentioned above, the vehicle 1 including the same may also have those effects. Specifically, the battery pack 10 may suppress the occurrence of flame inside the pack case 200 by removing elements that may cause flame in the event of an abnormality in the battery cell 110 or battery module 100. In addition, it is possible to quickly discharge, in the event of an abnormality in the battery cell 110 or battery module 100, venting gas to the outside of the pack case 200, thereby suppressing the flame, and maximally prevent thermal damage to other battery modules 100, thereby effectively securing thermal propagation prevention performance in a pack. Accordingly, the vehicle 1 including the battery pack 10 also has advantages in safety and reliability.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery modules comprising a plurality of battery cells;
a pack case configured to accommodate the plurality of battery modules;
a venting device provided in the pack case and configured to discharge gas generated from the battery module to the outside of the pack case; and
a cartridge configured to release carbon dioxide stored therein toward the venting device.

2. The battery pack according to claim 1,
wherein the cartridge is provided inside the pack case, and
wherein the cartridge and the venting device are disposed in a straight line in the horizontal direction.

3. The battery pack according to claim 2,
wherein the pack case comprises
a side frame configured to surround the plurality of battery modules and having the venting device coupled thereto, and
a partition configured to divide the plurality of battery modules inside the side frame, and
wherein at least a portion of the cartridge is coupled to the partition facing one side of the side frame on which the venting device is provided.

4. The battery pack according to claim 3,
further comprising an internal-pressure sensor provided inside the pack case and configured to measure pressure inside the pack case,
wherein, if the pressure measured by the internal-pressure sensor is equal to or greater than a first value, carbon dioxide stored inside the cartridge is released toward the venting device.

5. The battery pack according to claim 4,
wherein the venting device is configured to operate if the pressure inside the pack case is equal to or greater than a second value, and
wherein the first value is defined to be greater than the second value.

6. The battery pack according to claim 5,
wherein the first value is defined as 0.2 bar.

7. The battery pack according to claim 4,
wherein a plurality of cartridges and a plurality of venting devices are provided,
wherein a plurality of units comprised of one cartridge and one venting device is provided, and
wherein the plurality of units is provided symmetrically with respect to the center of the side frame.

8. The battery pack according to claim 7,
wherein the pack case further comprises
a cross-beam configured to connect at least portions of the side frame to each other and partition the plurality of battery modules, and
wherein the plurality of units is symmetrically provided on both sides of the cross-beam.

9. The battery pack according to claim 8,
wherein the internal-pressure sensor is provided in a space between the battery module and the side frame.

10. The battery pack according to claim 9,
wherein a plurality of internal-pressure sensors is provided symmetrically on both sides of the cross-beam.

11. The battery pack according to claim 4,
wherein the cartridge comprises
a cylinder unit comprising a storage portion having a space for storing carbon dioxide and a release portion extending from the storage portion and discharging carbon dioxide therethrough.

12. The battery pack according to claim 11,
wherein the diameter of the release portion is configured to be smaller than the diameter of the storage portion.

13. The battery pack according to claim 11,
wherein the cartridge further comprises
an operation unit connected to the cylinder unit and configured to release carbon dioxide from the cylinder unit if the pressure measured by the internal-pressure sensor is equal to or greater than the first value.

14. A vehicle comprising the battery pack according to any one of claims 1 to 13.
